# EUROPEAN PATENT SPECIFICATION

(11) **EP 3 314 186 B1**
(45) Date of publication and mention of the grant of the patent: **09.03.2022**
(21) Application number: 16774924.1
(22) Date of filing: 28.09.2016
(51) Int. Cl.: F28D 20/00

(54) **HEAT EXCHANGE SYSTEM WITH A HEAT EXCHANGE CHAMBER WITH A FOIL, METHOD FOR MANUFACTURING THE HEAT EXCHANGE SYSTEM AND METHOD FOR EXCHANGING HEAT BY USING THE HEAT EXCHANGE SYSTEM**
WÄRMEAUSTAUSCHSYSTEM MIT EINER WÄRMEAUSTAUSCHKAMMER MIT EINER FOLIE, VERFAHREN ZUR HERSTELLUNG DES WÄRMEAUSTAUSCHSYSTEMS UND VERFAHREN FÜR WÄRMEAUSTAUSCH MIT DEM WÄRMEAUSTAUSCHSYSTEM
SYSTÈME D'ÉCHANGE DE CHALEUR À CHAMBRE D'ÉCHANGE DE CHALEUR AVEC UNE FEUILLE, PROCÉDÉ DE FABRICATION DU SYSTÈME D'ÉCHANGE DE CHALEUR ET PROCÉDÉ D'ÉCHANGE DE CHALEUR EN UTILISANT LE SYSTÈME D'ÉCHANGE DE CHALEUR

(30) Priority: 30.09.2015 EP 15187741
(43) Date of publication of application: 02.05.2018
(73) Proprietor: Siemens Gamesa Renewable Energy A/S, 7330 Brande (DK)
(72) Inventor: SEIDEL, Volker, 08014 Barcelona (ES)
(74) Representative: Aspacher, Karl-Georg
(86) International application number: PCT/EP2016/073101
(87) International publication number: WO 2017/055345

(56) References cited:
- DE-A1- 2 721 173
- DE-A1- 2 949 584
- DE-A1- 19 929 692
- DE-A1-102011 107 315
- GB-A- 2 070 762

## Description

### BACKGROUND OF THE INVENTION

### 1. FIELD OF THE INVENTION

The present invention refers to a heat exchange system with a heat exchange chamber, a method for manufacturing the heat exchange system and a method for exchanging heat by using the heat exchange system.

### 2. DESCRIPTION OF THE RELATED ART

Despite the integration of renewable energy into the public electric energy system (power grid) a large share of electricity is nowadays still generated by fossil energy sources. But the global climate change requires the further development of renewable energies.

The energy output of renewable energy sources like wind and solar is not constant throughout a day or throughout a year. Consequently, electricity which is generated by utilizing energy from renewable energy sources fluctuates.

In order to manage this fluctuating electricity, heat (thermal energy) storage systems are developed for storing and releasing thermal energy (heat exchange system). Such a heat exchange system comprises a heat exchange chamber with heat exchange chamber boundaries which surround a heat exchange chamber interior. The heat exchange chamber interior is filled with heat storage material like stones. The heat exchange chamber boundaries comprise a first opening for guiding an inflow of a heat transfer fluid, e.g. air, into the heat exchange chamber interior and a second opening for guiding out an outflow of the heat transfer fluid out of the heat exchange chamber interior.

For a charging mode, the heat exchange system additionally comprises a charging unit for heating the heat transfer fluid with the aid of excess electricity. The resulting hot heat transfer fluid is infused into the heat exchange chamber interior via one of the openings (e.g. first opening) of the heat exchange chamber boundaries. This opening defines a "hot" terminal of the heat exchange chamber. The hot heat transfer fluid is guided through the heat exchange chamber interior. By the guiding of the hot heat transfer fluid through the heat exchange chamber interior a heat transfer from the heat transfer fluid to the heat storage material is caused. Heat is stored by the heat storage material.

Via the other opening (second opening) of the heat exchange chamber the resulting "cold" heat transfer fluid is guided out of the heat exchange chamber interior. Thereby, this opening of the heat exchange chamber boundaries defines a "cold" terminal (end) of the heat exchange chamber. The charging mode is stopped when the temperature at the cold terminal of the heat exchange chamber begins to rise above a predetermined temperature.

In a discharging mode of the heat exchange chamber this stored heat can be recovered: "cold" heat transfer fluid is infused into the heat exchange chamber interior via one of the opening of the heat exchange chamber boundaries. In this case, this opening defines a "cold" terminal. The cold heat transfer fluid is guided through the hot heat exchange chamber interior. By the guiding of the cold heat transfer fluid through the heat exchange chamber interior a heat transfer from the heat storage material to the heat transfer fluid is caused. Heat is released from the heat storage material.

Via the second opening of the heat exchange chamber boundaries the resulting "hot" heat transfer fluid is guided out of the heat exchange chamber interior. Thereby, the second opening of the heat exchange chamber defines a "hot" terminal of the heat exchange chamber.

The resulting hot heat transfer fluid can be used for generating steam with which a steam turbine is driven. Result of the described discharging mode: Heat is transformed back to electricity.

The discharging mode is stopped when the temperature at the cold terminal of the heat exchange storage begins to drop below a certain temperature.

For a high round trip efficiency of the heat exchange system it is important that thermal losses to the environment are reduced.

The patent applications DE 27 21 173 A1, DE 10 2011 107 315 A1, DE 29 49 584 A1, GB 2 070 762 A, and DE 199 29 692 A each show solutions in which thermal losses to the environment are reduced as the respective heat stores are placed underground and surrounded by soil.

### SUMMARY OF THE INVENTION

It is an objective of the invention to provide a heat exchange system with little impact to the environment in regard to its space requirements.

This objective is achieved by the invention specified in the claims.

A heat exchange system with at least one heat exchange chamber is provided. The heat exchange chamber comprises heat exchange chamber boundaries which surround at least one heat exchange chamber interior of the heat exchange chamber. The heat exchange chamber boundaries comprise at least one first opening for guiding in an inflow of at least one heat transfer fluid into the heat exchange chamber interior and at least one second opening for guiding out an outflow of the heat transfer fluid out of the heat exchange chamber interior. At least one heat storage material is arranged in the heat exchange chamber interior such that a heat exchange flow of the heat transfer fluid through the heat exchange chamber interior causes a heat exchange between the heat storage material and the heat transfer fluid. The heat exchange chamber is at least partly covered by at least one foil. The foil is preferably an EPDM rubber foil or a PVC foil.

In a preferred embodiment, at least one of the heat exchange chamber boundaries is at least partly formed by at least one soil boundary. The respective heat exchange chamber boundary comprises the soil boundary of the soil excavation. In a preferred embodiment, the soil boundary is formed by filled ground. The filled ground is preferably a result of digging into the soil for the providing of the soil excavation. So, piled up soil is used.

In addition to the heat exchange system, a method for manufacturing a heat exchange system with following manufacturing steps is provided: a) providing at least a component of the heat exchange chamber and b) arranging of the foil on the component of the heat exchange chamber. Preferably, the arranging of the foil on the component of the heat exchange chamber comprises a gluing of the foil to the component of the heat exchange chamber. Alternatively or in addition, a mechanical clamping of the foil and the heat exchange chamber together is possible, too.

Moreover, a method for exchanging heat by using the heat exchange system is provided. In an operating mode of the heat exchange system the heat exchange flow of the heat transfer fluid is guided through the heat exchange chamber interior, wherein a heat exchange between the heat storage material and the heat transfer fluid is caused.

The heat exchange chamber is a space, cavity or a housing in which the heat storage material is located. Inside of the heat exchange chamber the heat exchange takes place. In order to provide an efficient heat exchange, the heat exchange chamber is preferably thermally insulated against the surroundings. The loss of heat is reduced by the thermal insulation.

The heat transfer fluid is guided (led) into the heat exchange chamber interior via the first opening and is guided out of the heat exchange chamber interior via the second opening. The first opening of the heat exchange chamber boundaries is an inlet opening. The second opening of the heat exchange chamber boundaries is an outlet opening. Thus, there are different areas of the heat exchange chamber boundaries, namely an inlet area of the heat exchange chamber boundaries with the first opening and an outlet area of the heat exchange chamber boundaries with the second opening.

The operating mode of the heat exchange system is selected from the group consisting of charging mode with a heat transfer from the heat transfer fluid to the heat storage material and a discharging mode with a heat transfer from the heat storage material to the heat transfer fluid.

Depending on the operating mode, a specific opening can have the function of an inlet opening or the function of an outlet opening. The flow direction of the heat exchange flow depends on the operating mode. Preferably, during the charging mode the heat exchange flow is directed in a charging mode direction, during the discharging mode the heat exchange flow is directed in a discharging mode direction and the charging mode direction and the discharging mode direction are opposed to each other (countercurrent operation). But, a change of the directions of the heat exchange flow is not necessary. Charging mode direction and discharging mode direction comprise the same direction (co-current operation).

In countercurrent operation, switching from the charging mode to the discharging mode the direction of the heat exchange flow through the heat exchange chamber interior is reversed and consequently, the function of the openings (inlet opening, outlet opening) is reversed, too. With such a solution it is especially advantageous to use the same heat transfer fluid for the charging mode and for the discharging mode. But of course, different heat transfer fluids for the charging mode and the discharging mode can be used, too.

For the charging mode, the heat exchange system is equipped with at least one charging unit for heating the heat transfer fluid. This charging unit is preferably located upstream of the heat exchange chamber.

Preferably, the charging unit comprises at least one electrical heating device which is selected from the group consisting of resistance heater, inductive heater, emitter of electromagnetic radiation and heat pump. The electromagnetic radiation is preferably infrared radiation. A combination of different electrical heating devices is possible. With the aid of the electrical heating devices electricity is transformed into heat. This heat is absorbed by the heat transfer fluid and transported to the heat storage material in the heat exchange chamber interior.

For instance, the electrical heating device comprises a resistance heater. This heater is located in the heat exchange inflow. The resistance heater comprises a large heat exchange area for an efficient heat exchange from the resistance heater to the heat transfer fluid. For instance, the large heat exchange area is formed by a grid of the resistance heater. A meander shaped resistance heater is possible, too. With such a measure, the heat transfer to the heat transfer fluid is enhanced. In addition, the possibility of the (not desired) occurrence of hot spots within the resistance heater is reduced.

The heat exchange system is preferably equipped with at least one discharging unit for discharging the heat transfer fluid of the outflow from heat for production of electricity. Heat is removed from the heat transfer fluid. The removed heat is transformed into electricity. In a preferred embodiment, the transformation of heat into electricity is carried out by a water/steam cycle for driving a turbine of a steam power plant.

The discharging mode can be realized when electricity prices and demand are high or when the production of renewable energies is low. For that and in order to limit the costs which are connected to the invention, it is advantageous to use existing power plants. So, the heat exchange system is a kind of retrofit system. For instance, well suited are CCPP (combined cycle power plant) since their heat recovery steam generator (HRSG) is similar to the application proposed here. Nevertheless, hard coal, oil, gas, waste incineration, wood or lignite fired power plants can be used since the charging unit can be designed for high temperatures to match the temperatures used in the steam generator. In a hybrid mode the fuel can be used to increase the temperature from the temperature level of the heat exchange system to the operating temperature of the original furnace or boiler design.

In a preferred embodiment, the heat exchange system is equipped with at least one flow adjusting element for adjusting the heat exchange flow through the heat exchange chamber interior, for adjusting the inflow into the heat exchange chamber interior and/or for adjusting the outflow out of the heat exchange chamber. The flow adjusting element comprises at least one active fluid motion device which is selected from the group consisting of blower, fan and pump and/or the flow adjusting element comprises at least one passive fluid control device which is selected from the group consisting of activatable bypass pipe, nozzle, flap, damper and valve. A multitude of these devices are possible as well as a combination of these devices. In addition, flow adjusting elements can be arranged serially or in parallel. For instance, two flaps are arranged at two openings in order to adjust the inflows of the heat transfer fluid into the heat exchange chamber interior and consequently in order to adjust the temperature distribution in the heat exchange chamber interior.

The advantage of passive control devices is that they are cheap. In addition, passive control devices are very reliable. But preferably, active motion devices are used. By that, it is advantageous that driving units of the active fluid motion devices like electrical motors and electrical equipment are located outside of the heat exchange flow with the (possibly very hot) heat transfer fluid.

Just to be noted: There are different locations for the flow adjusting element possible. The flow adjusting element can be directly arranged in the heat exchange chamber interior, downstream of the heat exchange chamber interior and/or upstream of the heat exchange chamber interior. The location depends - inter alia - on the kind of flow adjusting element (active fluid motion device or passive fluid control device).

The heat storage material can be liquid and/or solid. For instance, a core of the heat storage material is solid and a coating of this solid core is liquid. Such a liquid coating can comprise ionic liquid.

The solid material comprises preferably bulk material. Mixtures of different liquid materials and different solid materials are possible as well as mixtures of liquid and solid materials.

It is possible that the heat storage material is a thermo-chemical energy storage material: Thermal energy can be stored via an endothermic reaction whereas thermal energy can be released via an exothermic reaction. Such a thermo chemical storage material is for instance the calcium oxide/calcium hydroxide system.

The heat storage materials can be arranged in one or more specific containers made of non-reactive container material. Non-reactive means that no chemical reaction between the heat storage material and the container material takes place during the heat exchange process.

In a preferred embodiment, the heat storage material comprises at least one chemically and/or physically stable material. In the range of the operational temperature of the heat exchange system the heat storage material does not change its physical and/or chemical properties. A physically stable material does not change its physical properties during the heat exchange. For instance, the heat storage material remains in a solid state in the operating temperature range. A chemically stable material does not change its chemical composition during the heat exchange. For instance, such a chemically stable material is a phase change material (PCM).

Moreover, a complex heat exchange system with different heat exchange chambers with different heat storage materials and/or different heat transfer fluids is possible, too. For Instance, a heat exchange chamber with stones as heat storage material and a heat exchange chamber with a phase change material as a heat storage material are combined together (in parallel or in series).

In a preferred embodiment, the heat storage material comprises sand and/or stones. The stones can be natural stones or artificial stones. Mixtures thereof are possible, too. Artificial stones can consist of containers which are filled with heat storage material. This heat storage material is for instance a phase change material or a thermo-chemical storage material (see above).

Preferably, the stones comprise gravel (pebbles), rubbles and/or grit (splits). The artificial material comprises preferably clinkers or ceramics. Again, mixtures of the mentioned materials are possible, too.

In order to provide a cheap energy storage material it is advantageous to use waste material. Therefore, in a preferred embodiment, the artificial material comprises at least one by-product of an industrial process. For instance, the by-product is iron silicate. Iron silicate origins from a slag of copper production.

In a preferred embodiment, heat exchange channels are embedded in the heat storage material for guiding of the heat exchange flow through the heat exchange chamber interior. The heat storage material forms a heat exchange bed. The heat exchange bed comprises the heat exchange channels. The heat exchange channels are embedded into the heat storage bed such that the heat exchange flow of the heat transfer fluid through the heat exchange channels causes the heat exchange between the heat storage material and the heat transfer fluid. The heat exchange channels can be formed by interspaces (gaps) of the heat storage material. For instance, the heat storage material comprises stones. The stones form the heat exchange bed with the heat exchange channels. In addition or alternatively, the heat storage material is porous. Open pores of the heat storage material form the heat exchange channels.

The heat transfer fluid is selected from the group consisting of a liquid and a gas. The gas is selected from the group consisting of inorganic gas and/or organic gas. The inorganic gas is preferably air. Mixtures of different liquids are possible as well as mixtures of different gases.

Preferably, the heat transfer fluid comprises a gas at ambient gas pressure. Preferably, the gas at the ambient pressure is air. The ambient pressure (900 hPa to 1.100 hPa) varies such that the heat exchange flow through the heat exchange chamber interior is caused.

For the guiding of the heat transfer fluid into the heat exchange chamber interior and for the guiding of the heat transfer fluid out of the heat exchange chamber interior a pipe system (or channel system, ducting system) is used. This pipe system can be closed (with a closed loop) or can be open (with an open loop).

For instance the heat transfer fluid is ambient air of the environment. The loop is an open loop. Air from the environment is introduced into the heat exchange system and air of the heat exchange system is released to the surroundings. There is an air exchange during the operation of the heat exchange system.

In contrast to that, there is no air exchange or a selectively adjustable air exchange during the operation in a closed loop. Air of the environment is not added or just added on a small scale to the air which is used as heat transfer fluid or for pressured compensation. This has following specific advantage: In a situation with almost completely charged heat storage material, heat transfer fluid with remaining heat would be released to the environment in an open loop. The remaining heat is lost. In contrast to that, in a closed loop this heat transfer fluid with remaining heat stays in heat exchange system. The remaining heat is not lost. Therefore, in a preferred embodiment, a closed loop is implemented and wherein the inflow comprises the outflow. The outflow is guided back into the heat exchange chamber interior.

In a preferred embodiment of the heat exchange system, the soil boundary which is formed by the filled ground is a ceiling of the heat exchange chamber. So, the heat exchange chamber interior with the heat storage material is covered by the filled ground.

Preferably, the soil boundary which is formed by the filled ground is designed such that a packing of the heat storage material within the heat exchange chamber interior can be compensated. For instance, the heat storage material comprises stones. During a couple of charting cycles and discharging cycles the stones crack. Hence, a packing of the heat storage material takes place. This packing is compensated.

Additional layers can improve the above describe compensation function. For this, a ballast layer with ballast material is advantageous. In a preferred embodiment, the ceiling of the heat exchange chamber is covered by at least one ballast layer with sand. The ballast material is sand and/or soil. Other ballast materials are possible, too.

In a preferred embodiment, the heat exchange chamber is at least partly covered by at least one foil.

Preferably, the foil is arranged at least partly on top (of the heat exchange chamber and/or at least partly on a side of the heat exchange chamber and/or at least partly below the heat exchange chamber. In the latter case, a bottom of the heat exchange chamber comprises the foil.

Preferably, the foil is a dimension adaption foil for compensation of a packing of the heat storage material in the heat storage chamber interior (and/or for an adaption of the foil to a surrounding of the foil. Dimension changes of the heat exchange chamber and/or dimension changes of the surroundings of the heat exchange chamber do not affect the effectiveness of the heat exchange system with the heat storage chamber.

In a preferred embodiment, the dimension adaption foil comprises wrinkles. Preferably, the wrinkles are aligned in parallel to the heat exchange flow and/or perpendicular to the heat exchange flow of the heat transfer fluid through the heat exchange chamber interior. The wrinkles support the function of the foil.

In a preferred embodiment, the foil is resistant against a permeation of air and/or water. Preferably, the heat exchange chamber is sealed by the foil. The water is, for instance, impounded water. So, water from the outside cannot penetrate into the heat exchange chamber interior as well as air (heat transfer fluid) cannot leave the heat exchange chamber interior uncontrolled. Thereby, the openings for the inflow and the outflow are left out. The openings are not sealed.

As described above, the stacking of different layers with different functions is advantageous. This refers to the heat exchange chamber on a whole as well as specific parts of the heat exchange chamber, especially the top of the heat exchange chamber. In a preferred embodiment, the ceiling of the heat exchange chamber comprises a layer structure with following layers: Thermal insulation layer and soil layer with filled ground. With the aid of the thermal insulation heat cannot leave the heat exchange chamber uncontrolled. With the aid of the soil layer the above described packing of the heat storage material can be compensated. In addition, a swelling the heat exchange chamber can be avoided. Further layers for stabilizing the heat exchange chamber are possible, too. Such a further layer can comprise a mat.

Preferably, the thermal insulation layer comprises at least one thermal insulation material is selected from the group consisting of ceramics, sinter, stones, foamed clay, mineral wool, mineral foam, mineral fibers and foam glass. Thereby, it is advantageous, that the thermal insulation material comprises a density between 500 kg/m³ and 1.500 kg/m³. Less densities are possible, too. For instance, a density is of less than 100 kg/m³, e.g. 64 kg/m³.

In a preferred embodiment, the layer structure comprises at least one ballast layer with sand and/or at least one foil layer with at least one foil. With this measure the compensation of the packing is improved as well as the sealing of the heat chamber interior and a swelling of the heat chamber interior.

The different layer can be arranged in different ways. In a preferred embodiment, the foil layer is arranged between the thermal insulation layer and the soil layer. Alternatively or in addition, the foil can be arranged between two layers with sand or two thermal insulation layers or two soil layers.

The penetration of water into the heat exchange chamber interior is a crucial problem. In order to avoid this is meaningful to use a drainage system. In a preferred embodiment, the heat exchange chamber is at least partly surrounded by at least one drainage system for avoiding penetration of water into the heat exchange chamber interior. Preferably, the heat exchange chamber is completely surrounded by the drainage system. By this measure the probability of the penetration of water into the heat exchange chamber interior is reduced.

The heat exchange chamber is a vertical heat exchange chamber and/or a horizontal heat exchange chamber. But preferably, the heat exchange chamber is a horizontal heat exchange chamber.

The term "horizontal heat exchange chamber" implies a horizontal main (average) flow of the heat transfer fluid through the heat exchange chamber interior. The flow direction of the horizontal main flow is essentially parallel to the average surface of the earth. The horizontal direction is essentially a perpendicular direction to the direction of the gravity force which affects the heat transfer fluid. Perpendicular means in this context that deviations from the perpendicularity of up to 20° and preferably deviations of up to 10° are possible.

A horizontally oriented direction of the heat exchange flow can be achieved by lateral first openings and/or lateral second openings. The horizontal heat exchange chamber comprises these openings in its side heat exchange chamber boundaries. In addition, with the aid of an active fluid motion device like a blower or a pump the heat exchange flow in the heat exchange chamber interior is caused. The heat transfer fluid is blown or pumped into the heat exchange chamber interior or is pumped or sucked out of the heat exchange chamber interior.

In contrast to the term "horizontal heat exchange chamber", the term "vertical heat exchange chamber" implies a vertical main flow of the heat transfer fluid through the heat exchange chamber interior. For instance, the operating mode is the charging mode. In a vertical heat exchange chamber the heat exchange flow is preferably directed downwards (top down) during the charging mode. The vertical main flow (essentially parallel but in the opposite direction to the direction of gravity force) can be caused by an active fluid motion device (blower or pump). The first opening is located at a top of the heat exchange chamber and the second opening is located at a bottom of the heat exchange chamber.

Based on natural convection, in a vertical heat exchange chamber the temperature of the heat storage material along a cross section perpendicular to the flow direction of the heat transfer fluid is approximately the same (horizontal isothermal lines).

In contrast to that, in a horizontal heat exchange chamber due to natural convection the temperature of the heat storage material along the cross section perpendicular to the flow direction of the heat transfer fluid (see below) can differ (inclined isothermal lines).

It has to be noted that the terms "horizontal" and "vertical" are independent from the dimensions of the heat exchange chamber and its orientation. Decisive is the direction of the flow of the heat transfer fluid through the heat exchange chamber interior. For instance, a "horizontal heat exchange chamber" can have a chamber length which is less than the chamber height of the heat exchange chamber.

Besides pure vertical and horizontal heat exchange chambers, a mixture of "vertical heat exchange chamber" and "horizontal heat exchange chamber" is possible, too. In such a heat exchange chamber, the main flow of the heat transfer fluid is the result of horizontal and vertical movement of the heat transfer fluid through the heat exchange chamber interior.

In a preferred embodiment, at least two first openings are arranged vertically to each other and/or at least two second openings are arranged vertically to each other. Openings are arranged above each other. By this measure it is possible to influence a vertical distribution of heat exchange flows in order to improve a temperature distribution (temperature front) in the heat storage material and heat exchange chamber interior respectively. Isothermal lines perpendicular to the flow direction are influenced.

The temperature front is defined by neighboring cold and hot areas of the heat storage material in the heat exchange chamber interior caused by the flow of the heat transfer fluid through the heat exchange chamber interior. The temperature front is aligned perpendicular to the respective flow direction of the heat exchange flow through the heat exchange chamber. During the charging mode the heat exchange flow is directed in a charging mode direction wherein the temperature front moves along this charging mode direction. In contrast to that, during the discharging mode the heat exchange flow is directed in the discharging mode direction (opposite to the charging mode direction) wherein the temperature front moves along the discharging mode direction. In both cases, the temperature front of the heat exchange chamber is migrating through the heat exchange chamber to the respective hot/cold ends of the heat exchange chamber. It is to be noted that in case of countercurrent operation, the hot (hot opening) end remains the hot end (hot opening), independently from the mode (charging mode or discharging mode).

The temperature front is a zone of strong temperature gradient in the heat storage material, i.e. high temperature difference between hot and cold areas. In this application it separates the hot (charged with heat) and the cold (not charged) zone in the heat exchange chamber with the heat storage material. The temperature front develops due to the transfer of heat from the heat transfer fluid to the heat storage material during the charging mode and due to the transfer of heat from the heat storage material to the heat transfer fluid during the discharging mode. Isothermal zones/lines develop ideally (e.g. without the influence of gravitation) perpendicular to the main flow direction, i.e. zones/lines of constant temperature.

In order to optimize the efficiency of the heat exchange system it is advantageous to ensure a uniform temperature front. There are just small variations concerning the temperature gradients perpendicular to the flow direction. In a vertical heat exchange chamber with a flow direction top down, the temperature front is nearly uniform due to natural convection. So, in this case additional measures are not necessary. In contrast to that, natural convection leads to a nonuniform temperature front in a horizontal heat exchange chamber. So, in this case additional measures could be meaningful (like usage of more openings or usage of more flow adjusting elements).

Preferably, the heat exchange chamber boundary with one of the openings comprises a transition area with a tapering profile such that an opening diameter of the opening aligns to a first tapering profile diameter of the tapering profile and a chamber diameter of the heat exchange chamber aligns to a second tapering profile diameter of the tapering profile. The transition area comprises an increasing cross section from the respective opening towards the heat exchange chamber. This is especially advantageous for the first opening for guiding the heat transfer fluid into the heat exchange chamber. The diameter of the transition area expands from the opening diameter of the first opening to the diameter of the heat exchange chamber. With the aid of the tapering profile the inflow of the heat transfer fluid is guided into the heat exchange chamber interior. The guided inflow is distributed to a wide area with the heat storage material. By this measure a capacity of the heat exchange unit (heat storage material which is located in the heat exchange chamber) can be highly exploited. In addition, the efficiency of the heat exchange can be improved by adapting the heat exchange flow. Remark: For additionally adapting the heat exchange flow, a diffuser can be located at the first opening, especially in the transition area. By means of the diffuser an incident flow of the heat transfer fluid into the heat exchange chamber interior can be adjusted. For instance, such a diffuser is formed by stones which are located in the transition area with the tapering profile.

For the case that the heat exchange chamber comprises a number of first openings it is very advantageous to arrange a described transition area at that number of first openings. Thereby, the first openings can comprise a joint transition area or individual transition areas.

The transition area with the second opening for guiding the heat transfer fluid out of the heat exchange chamber interior can be tapered, too. By this measure the guiding of heat flow out of the heat exchange chamber interior of the heat exchange chamber is simplified.

In this context, the use of a short transition area is very advantageous. For instance, the short transition area comprises a dimension which is less than 50% of a length of the heat exchange chamber. For instance, the dimension is about 20% of the length of the heat exchange chamber. The length is the dimension of the heat exchange chamber that is parallel to the main flow direction of the heat transfer fluid through the heat exchange chamber interior. But of course, the dimension of the transition area is dependent on a number of features of the complete heat exchange system, e.g. temperature of the heat transfer fluid, mass flow of the heat exchange flow, speed of the heat exchange flow at the relevant opening temperatures, etc.

In order to save space and in order to reduce the surface-volume ratio for a reduced heat loss, it is advantageous to implement a transition area as short as possible. The result is a short transition channel for guiding the inflow into the heat exchange chamber interior. Besides an efficient usage of the capacity of the heat exchange chamber a low space requirement is connected to this solution.

Preferably, the heat exchange chamber comprises a cylindrically shaped chamber boundary. For instance, the chamber boundary which comprises the first opening is formed as a circular cylinder and/or the chamber boundary with the second opening is formed as a circular cylinder. Such shapes lead to best surface-volume ratios.

The dimensions of the heat exchange chamber can be different. But, the invention is especially advantageous for heat exchange systems with large heat exchange chambers. Therefore, in a preferred embodiment, the horizontal heat exchange chamber comprises a heat exchange chamber length which is at least twice of a heat exchange chamber width of the heat exchange chamber and/ or which is at least twice of a heat exchange chamber height of the heat exchange chamber. Preferably, the heat exchange chamber length is selected from the range between 20 m and 300 m. In addition, the heat exchange chamber width and/or the heat exchange chamber height are selected from the range of 1 m to 100 m.

The heat exchange system is especially adapted for operation at high temperatures of more than 300 °C. Therefore, in a preferred embodiment, an operating temperature of the operating mode is selected from the range between 300 °C and 1000 °C, preferably selected from the range between 500 °C and 1000 °C, more preferably selected from the range between 600 °C and 1000 °C, 650 °C to 1000 °C and most preferably between 700 °C and 1000 °C. A deviation of the temperature ranges is possible. In this context, very advantageous is an upper limit of the temperature range of 900 °C and most preferably an upper limit of the temperature range of 800 °C. The heat exchange system is a high temperature heat exchange system.

The proposed invention can be applied for renewable energy production as well as for conventional energy production. For instance, in order to increase the flexibility the steam cycle of fossil fired power plants (or nuclear power plants, etc.) it can be combined with the heat exchange system proposed here. In this case, the boiler of the steam cycle of the power plant can be operated with fuel when fuel costs are lower than electricity costs and the heat exchange system is charged in periods when electricity prices are low. Alternatively, the charging can take place during a period of excess production of energy.

With the invention the effectiveness of the heat exchange system is supported by the foil. Uncontrolled leakage of the heat transfer fluid out of heat exchange chamber interior is approximately completely eliminated.

### BRIEF DESCRIPTION OF THE DRAWINGS

Further features and advantages of the invention are produced from the description of exemplary embodiments with reference to the drawings. The drawings are schematic.
Figures 1 shows a heat exchange chamber of the heat exchange system.
Figure 2 shows a temperature distribution of the heat exchange chamber of figure 1 in a charging mode.
Figure 3 shows the heat exchange system in a charging mode.
Figure 4 shows the heat exchanges system in a discharging mode.

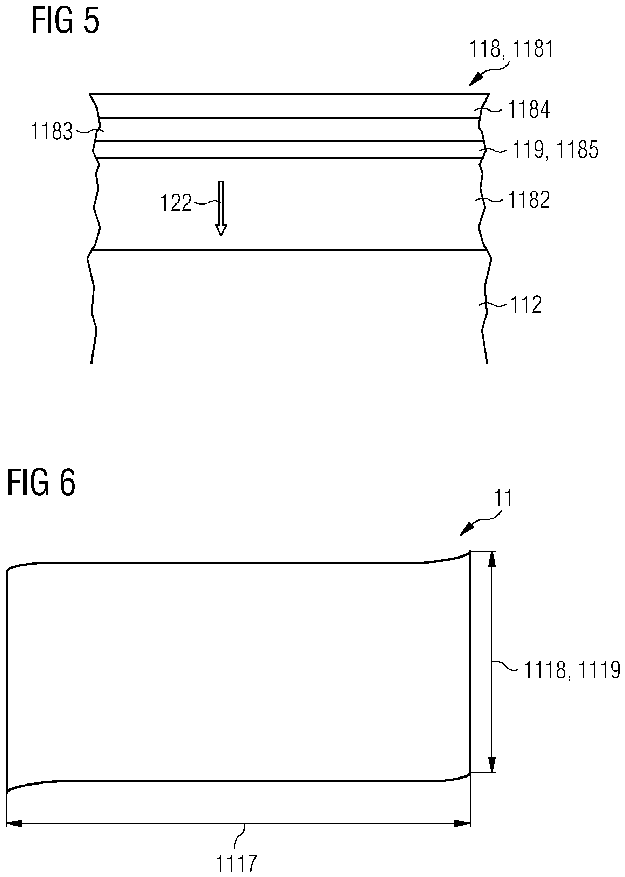

Figure 5 shows a specific layer structure of a ceiling of the heat exchange chamber.
Figure 6 shows the dimensions of the heat exchange chamber.
Figure 7 show the heat exchange chamber of figure 1 in a different view.
Figures 9 to 10 show different aspects of the heat exchange system with the heat chamber with the foil.

### DESCRIPTION OF PREFERRED EMBODIMENTS

Core of this invention is a heat exchange system 1 with a heat exchange chamber 11 on a high temperature level. The heat exchange chamber 11 is at least partly covered by at least one foil 119.

The heat exchange chamber 11 is at least partly arranged in at least one soil excavation 160 of a soil 161. In a not shown embodiment, the heat storage chamber 11 is not buried. The heat storage chamber is free standing. The heat storage boundaries are made of concrete (armoured or gas concrete).

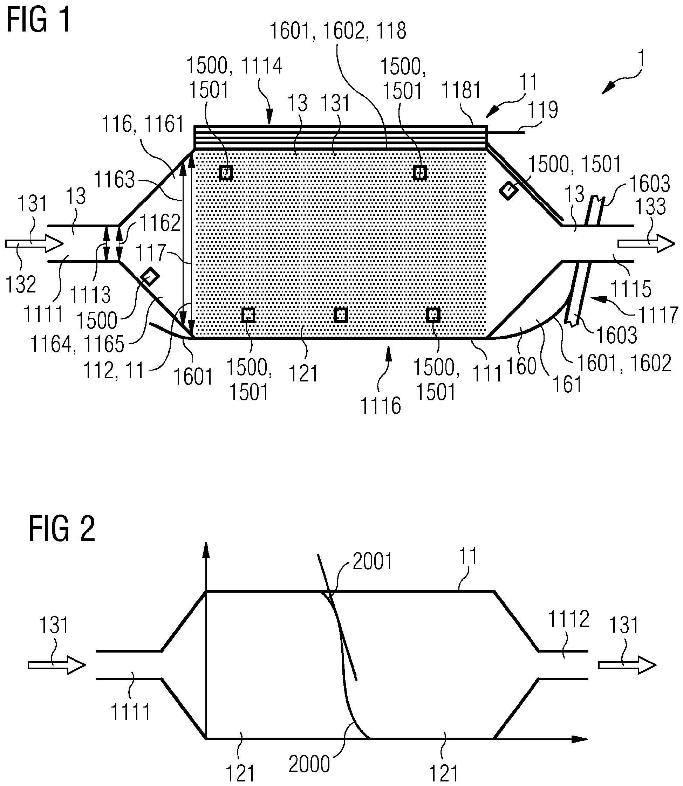

Heat storage material 121 (e.g. stones or sand) which is located in the heat exchange chamber interior 112 of the heat exchange chamber 11 (e.g. figure 2) can be charged and discharged with heat via the heat transfer fluid 13. Heat is stored by the heat storage material 121 and can be release from the storage material 121.

The temperature level of the stored heat is significantly higher compared to methods applied so far to increase the efficiency. The temperature level lies between 300 °C and 1000 °C, preferably between 500 °C and 1000 °C, more preferably between 650 °C and 1000 °C and most preferably between 700 °C and 1000 °C. The thermal capacity of the heat exchange system 1 lies in the range between 0.3 GWh and 100 GWh which causes a thermal power of 50 MW.

The heat exchange system 1 comprises at least one heat exchange chamber 11 with heat exchange chamber boundaries 111 which surround at least one heat exchange chamber interior 112 of the heat exchange chamber 11. The heat exchange chamber 11 is a horizontal heat exchange chamber 113.

The heat exchange chamber boundaries 111 comprise at least one first opening 1111 for guiding in an inflow 132 of at least one heat transfer fluid 131 into the heat exchange chamber interior 112 and at least one second opening 1112 for guiding an outflow 133 of the heat transfer fluid 131 out of the heat exchange chamber interior 112. At least one heat storage material 121 is arranged in the heat exchange chamber interior 112 such that a heat exchange flow 13 of the heat transfer fluid 131 through the heat exchange chamber interior 112 causes a heat exchange between the heat storage material 121 and the heat transfer fluid 131.

Exemplarily, the heat exchange chamber length of the horizontal heat exchange chamber 11 is about 200 m, the heat exchange chamber height of the heat exchange chamber 11 is about 10 m and the heat exchange chamber width of the heat exchange chamber is about 50 m.

With the embodiment, a stacking of different layers with different functions is described. The stacking refers to the ceiling 118 of the heat exchange chamber 11. The ceiling comprises at a layer structure 1181 with following layers above the heat storage material 121: Thermal insulation layer 1182 with mineral wool, foil layer 119 with an EPDM foil, thermal insulation layer 1182, ballast layer 1183 with sand and a soil layer 1182 with filled ground.

Alternatively, following stacking results: Heat storage material, mat (against abrasion), thermal insulation layer, mat (against trickling of sand), sand, foil, protection layer for protection of the foil and sand.

For the manufacturing of the heat exchange chamber of the heat exchange system following manufacturing steps are carried out a) providing of the soil excavation of a soil (removing soil) and b) arranging of the heat exchange chamber in the soil excavation of the soil. Thereby, different layers of the heat exchange chamber are just filled up resulting in the described layer structure.

With the aid of the proposed heat exchange system 1, thermal energy can be stored on a high temperature level during the charging mode. This stored thermal energy can be used during the discharging mode for the production of steam in a water steam cycle for reconversion into electrical energy.

One or more heat exchange chambers 11 are filled with solid heat storage material 121. The solid heat storage material comprises stones. Alternatively, sand is used.

There is a transition area 116 of the heat exchange chamber 11 with a tapering profile 1161. Thereby an opening diameter 1113 of the opening 1111 or 1112 aligns to a first tapering profile diameter 1162 of the tapering profile 1161 and a chamber diameter 117 of the heat exchange chamber 11 aligns to a second tapering profile diameter 1163 of the tapering profile 1161.

The inflow 132 of the heat transfer fluid 13 is guided into the heat exchange chamber interior 112. The guided inflow 132 is distributed to a wide area of heat storage material 121.

By this measure a capacity of the heat exchange unit (heat storage material 121 which is located in the heat exchange chamber interior 112) can be utilized in an advantageous manner.

The transition area 116 is short. The short transition area 116 projects into the heat exchange chamber 11. The result is a short transition channel for the guiding of the inflow 132 into the heat exchange chamber interior 112 of the heat exchange chamber 11.

The heat exchange system 1 is additionally equipped with at least one flow adjusting element 134 for adjusting a mass flow of the heat exchange flow 13 of the heat transfer fluid 131 through the heat exchange chamber interior 11. The flow adjusting element 134 is an active fluid motion device 1341 like a blower or a pump. Such a device enables a transportation of the heat transfer fluid 131 through the heat exchange chamber interior 112 of the heat exchange chamber 11. The blower or the pump can be installed upstream or downstream of to the heat exchange chamber 11.

In the charging mode, the heat transfer fluid 131 enters the heat exchange chamber 11 through a diffuser 1164. The diffuser 1164 comprises stones 1165 and is arranged at the transition area 116 of the heat exchange chamber 11.

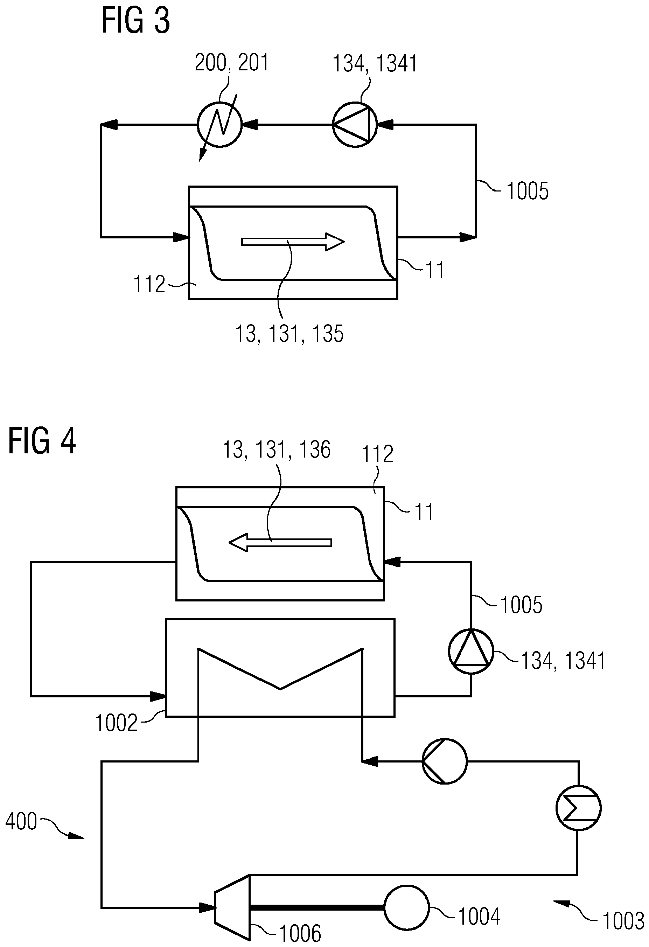

The heat exchange flow 13 of the heat transfer fluid 131 is directed in the charging mode direction 135. The flow adjusting element 134, 1341 is advantageous installed upstream of the charging unit 200, 201 (figure 3): Relatively cold heat transfer fluid passes the flow adjusting element 134, 1341 before absorbing heat from the charging unit.

For the charging mode, the heat transfer fluid 131 is heated up from ambient conditions by the electrical heating device 201 (charging unit 200). This charged (heated) heat transfer fluid is guided into the heat exchange chamber interior 112 of the heat exchange chamber 11 for charging of the heat storage material. Thereby the heat exchange between the heat transfer fluid and the heat storage material takes place. With reference 2000 the temperature front at a certain time of this charging process is shown (figure 2). In addition, the temperature gradient 2001 which results in the temperature front is depicted.

For the discharging mode (figure 4) the heat exchange system 1 comprises one or several heat exchange chambers 11 mentioned above, an active fluid motion device 1341 to circulate the heat transfer fluid 131 and a thermal machine for re-electrification, which can be a water/steam cycle 1003. The working fluid of this cycle is water and steam. The water/steam cycle 1003 has the function of a discharging unit 400. Essential components of the steam turbine cycle 1003 are a steam turbine 1006 and a generator 1004.

In the discharging mode, the heat exchange flow of the heat transfer fluid is directed into the charging mode direction 136.

With the aid of the heat exchange system (heat exchanger) 1002 heat of the heat transfer fluid is transferred to the working fluid of the steam cycle 1003.

The heat exchange system 1 comprises a closed loop 1005. Heat exchange fluid which has passed the heat exchange chamber interior 112 is guided back into the heat exchange chamber interior 112.

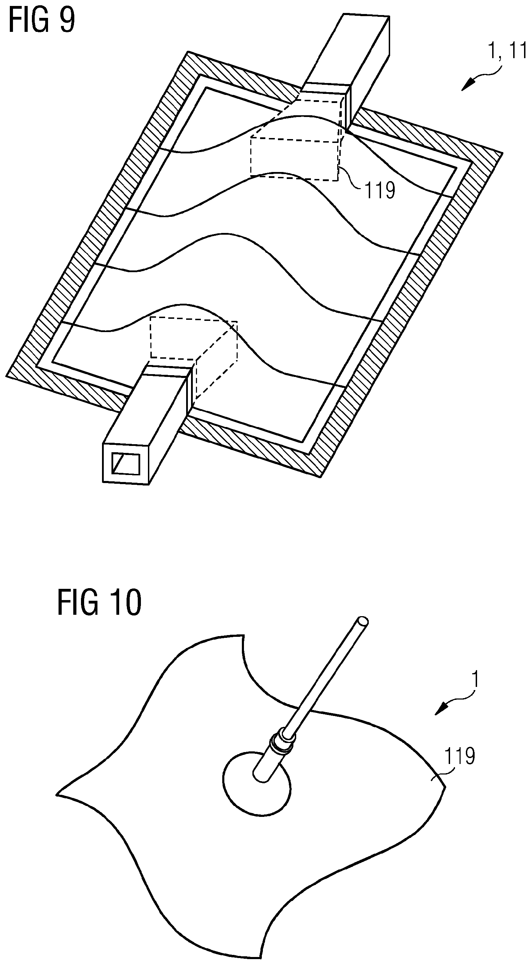

Additional aspects of the embodiment: The foil 119 is a dimension adapting foil 1191 with wrinkles 1192 (figure 9).

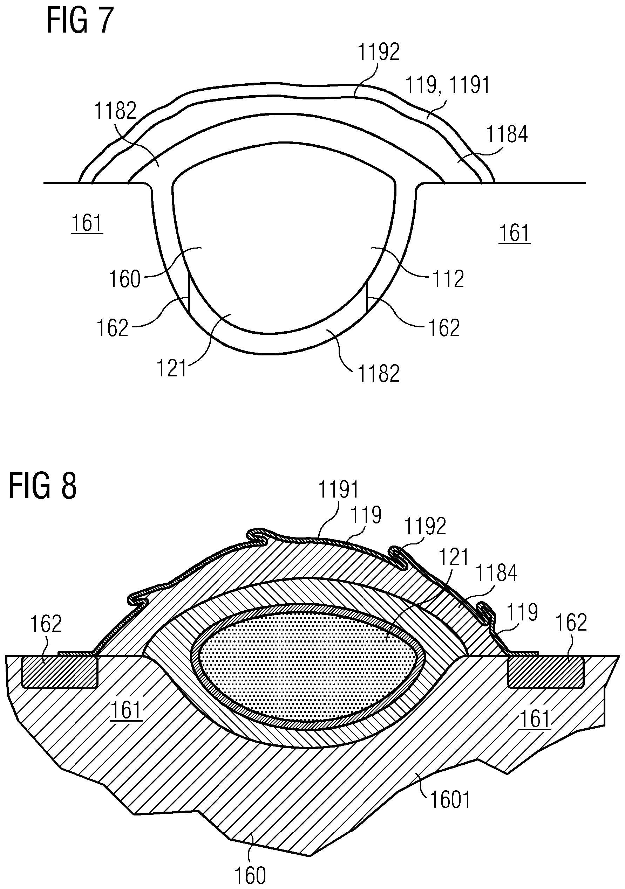

Fig. 7 shows a cross section of the heat exchange chamber. A top cover the heat exchange chamber is made of a thin foil that is mounted with wrinkles in the foil to compensate expansion and shrinking of the heat storage material. During the operation of the thermal storage the material is subject to thermal expansion since thermal energy is induced and extracted intermittently. This leads to a density change of the material which comes along with a volume change. In other words, the total storage volume increases and decreases during the operation of the storage. The heat storage material is a packed bed of e.g. rocks. Since the packed bed is integrated into the ground (soil) the heat storage material will most likely expand in vertical direction. That means that the top cover is lifted during operation. If the cover is fixed at the lateral positions to the ground it needs to compensate the expansion and therefore it is suggested to mount it with wrinkles in the foil.

Furthermore it is suggested to use for the outer cover an EPDM (ethylene propylene diene monomer) rubber foil. This material has high weather and ozone resistance and withstands thermal shocks up to about 150°C. The EPDM foil can be glued to rocks, concrete or gas concrete or any other flat surface. At the position where the wrinkles and the foundation frame are glued together in between the wrinkles the foil is glued as well.

The wrinkles can be oriented in parallel, perpendicular or any other angle to the main flow direction of the thermal transport fluid in the storage.

Fig. 11 shows a solution to seal the cover to the ground and to the inlet and outlet ducting. Concrete or gas concrete or other heavy construction material can be used as a ground integrated foundation frame 162 at the lateral sides of the heat exchange chamber. Here the EPDM foil is glued to seal it and prevent leakage.

At the openings the heat storage chamber is connected to a pipe or ducting system. This ducting system can be either directly connected to the foil or via an inlet manifold that can be built out of concrete or gas concrete. Here the EDPM foil can be glued to the ducting for a reduction of leakage. Under the ducting the system needs to be sealed as well. At this position EPDM foil can be glued to the ducting and to the foundation frame.

Fig. 11 shows a solution to integrate that measurement equipment in the solutions proposed above. Via EPDM collars/sleeves the measurement equipment such as thermocouples or differential pressure pipes can be sealed at the foil to avoid leakage. The measurement equipment has round shape such as pipes for differential pressure measurement and such as thermocouples that are made of a thick wire. The collars or sleeves can be glued with the EPDM foil and sealed by pipe clams at the tubes. Another solution is to use a liquid material in a mold with the measurement equipment that hardens out due to chemical reaction and seals the apparatus.

## Claims

1. Heat exchange system (1), with
- at least one heat exchange chamber (11) with heat exchange chamber boundaries (111) which surround at least one heat exchange chamber interior (112) of the at least one heat exchange chamber (11), wherein
- the heat exchange chamber boundaries (112) comprise at least one first opening (1111) for guiding in an inflow (133) of at least one heat transfer fluid (131) into the at least one heat exchange chamber interior (112) and at least one second opening for guiding out an outflow (133) of the at least one heat transfer fluid (131) out of the at least one heat exchange chamber interior (112);
- at least one heat storage material (121) is arranged in the at least one heat exchange chamber interior (112) such that a heat exchange flow (13) of the at least one heat transfer fluid (131) through the at least one heat exchange chamber interior (112) causes a heat exchange between the at least one heat storage material (121) and the at least one heat transfer fluid (131);
- the at least one heat exchange chamber (11) is at least partly covered by at least one foil (119);
- the at least one foil (119) is arranged at least partly on top (1114) of the at least one heat exchange chamber (11);
- the at least one foil (119) is a dimension adaption foil (1191) for compensation of a packing (122) of the at least one heat storage material (121) in the at least one heat storage chamber interior (112);
the at least one heat storage material (121) comprises stones; and
wherein the at least one heat transfer fluid (131) comprises a gas at ambient gas pressure.

2. Heat exchange system according to claim 1, wherein the at least one foil (119) is further arranged at least partly on a side (1115) of the at least one heat exchange chamber (11) and/or at least partly below the at least one heat exchange chamber (11).

3. Heat exchange chamber according to claim 1 or 2, wherein the at least one foil (119) is resistant against a permeation of air and/or water.

4. Heat exchange system according to one of the claims 1 to 3, wherein the at least one heat exchange chamber (11) is sealed by the at least one foil (119).

5. Heat exchange system according to any one of the preceding claims, wherein the dimension adaption foil (1191) comprises wrinkles (1192).

6. Heat exchange system according to claim 5, wherein the wrinkles (1192) are aligned in parallel to the heat exchange flow (13) and/or perpendicular to the heat exchange flow (13) of the at least one heat transfer fluid (131) through the at least one heat exchange chamber interior (112).

7. Heat exchanges system according to one of the claims 1 to 6, wherein the at least one foil (119, 1191) is an EPDM rubber foil or a PVC foil.

8. Heat exchange system according to one of the claims 1 to 7, wherein the at least one heat exchange chamber (11) is at least partly arranged in at least one soil excavation (160) of a soil (161).

9. Heat exchange system according to claim 8, wherein at least one chamber boundary (111) is at least partly formed by at least one soil boundary (1601).

10. Heat exchange system according to claim 8 or 9, wherein the soil excavation (160) comprises at least one foundation frame (162) for arranging the at least one heat exchange chamber (11) in the soil excavation (160).

11. Heat exchange system according to one of the claims 8 to 10, wherein at least one chamber boundary (111) is at least partly formed by at least one soil boundary (1601).

12. Heat exchange chamber according to one of the claims 1 to 11, wherein the at least one heat exchange chamber (11) is at least partly surrounded by at least one drainage system (1603) for avoiding penetration of water into the at least one heat exchange chamber interior (112).

13. Heat exchange system according to one of the claims 11 to 12, wherein a ceiling (118) of the at least one heat exchange chamber (11) comprises a layer structure (1181) with following layers:
- Thermal insulation layer (1182); and
- Soil layer (1184) with filled ground.

14. Heat exchange system according to claim 13, wherein the layer structure (1181) comprises at least one ballast layer (1183) with sand and/or at least one foil layer (1185) with at least one foil (119).

15. Heat exchange system according to any of the preceding claims, wherein the gas at the ambient pressure is air.

16. Method for manufacturing a heat exchange system (1) according to one of the claims 1 to 15, with following manufacturing steps:
a) Providing at least a component (111, 116) of the at least one heat exchange chamber (11) and
b) Arranging of the at least one foil (119) on the component (111, 116) of the at least one heat exchange chamber (11) and at least partly on top (1114) of the at least one heat exchange chamber (11).

17. Method according to claim 16, wherein the arranging of the at least one foil (119) on the component of the at least one heat exchange chamber (11) comprises a gluing of the at least one foil (119) to the component of the at least one heat exchange chamber (11).

## Patentansprüche

1. Wärmetauschsystem (1), mit
- mindestens einer Wärmetauschkammer (11) mit Wärmetauschkammergrenzen (111), die mindestens einen Wärmetauschkammer-Innenraum (112) der mindestens einen Wärmetauschkammer (11) umgeben, wobei
- die Wärmetauschkammergrenzen (112) mindestens eine erste Öffnung (1111) zum Einleiten eines Zuflusses (133) von mindestens einem Wärmeübertragungsfluid (131) in den mindestens einen Wärmetauschkammer-Innenraum (112) und mindestens eine zweite Öffnung zum Ableiten eines Abflusses (133) des mindestens einen Wärmeübertragungsfluids (131) aus dem mindestens einen Wärmetauschkammer-Innenraum (112) umfassen;
- mindestens ein Wärmespeichermaterial (121) in dem mindestens einen Wärmetauschkammer-Innenraum (112) derart angeordnet ist, dass ein Wärmetauschfluss (13) des mindestens einen Wärmeübertragungsfluids (131) durch den mindestens einen Wärmetauschkammer-Innenraum (112) einen Wärmetausch zwischen dem mindestens einen Wärmespeichermaterial (121) und dem mindestens einen Wärmeübertragungsfluid (131) verursacht;
- die mindestens eine Wärmetauschkammer (11) zumindest teilweise durch mindestens eine Folie (119) bedeckt ist;
- die mindestens eine Folie (119) zumindest teilweise auf der Oberseite (1114) der mindestens einen Wärmetauschkammer (11) angeordnet ist;
- die mindestens eine Folie (119) eine Dimensionsanpassungsfolie (1191) zur Kompensierung einer Verpackung (122) des mindestens einen Wärmespeichermaterials (121) in dem mindestens einen Wärmetauschkammer-Innenraum (112) ist;
das mindestens eine Wärmespeichermaterial (121) Steine umfasst; und
das mindestens eine Wärmeübertragungsfluid (131) ein Gas bei Umgebungsgasdruck umfasst.

2. Wärmetauschsystem nach Anspruch 1, wobei die mindestens eine Folie (119) ferner zumindest teilweise auf einer Seite (1115) der mindestens einen Wärmetauschkammer (11) und/oder zumindest teilweise unter der mindestens einen Wärmetauschkammer (11) angeordnet ist.

3. Wärmetauschsystem nach Anspruch 1 oder 2, wobei die mindestens eine Folie (119) ein Eindringen von Luft und/oder Wasser beständig verhindert.

4. Wärmetauschsystem nach einem der Ansprüche 1 bis 3, wobei die mindestens eine Wärmetauschkammer (11) durch die mindestens eine Folie (119) abgedichtet wird.

5. Wärmetauschsystem nach einem der vorhergehenden Ansprüche, wobei die Dimensionsanpassungsfolie (1191) Falten (1192) aufweist.

6. Wärmetauschsystem nach Anspruch 5, wobei die Falten (1192) parallel zu dem Wärmeaustauschfluss (13) und/oder senkrecht zu dem Wärmeaustauschfluss (13) des mindestens einen Wärmeübertragungsfluids (131) durch den mindestens einen Wärmetauschkammer-Innenraum (112) orientiert sind.

7. Wärmetauschsystem nach einem der Ansprüche 1 bis 6, wobei die mindestens eine Folie (119, 1191) eine EPDM-Kautschuk-Folie oder eine PVC-Folie ist.

8. Wärmetauschsystem nach einem der Ansprüche 1 bis 7, wobei die mindestens eine Wärmetauschkammer (11) zumindest teilweise in mindestens einem Bodenaushub (160) eines Bodens (161) angeordnet ist.

9. Wärmetauschsystem nach Anspruch 8, wobei mindestens eine Kammergrenze (111) zumindest teilweise durch mindestens eine Bodengrenze (1601) gebildet ist.

10. Wärmetauschsystem nach Anspruch 8 oder 9, wobei der Bodenaushub (160) mindestens einen Fundamentrahmen (162) zum Anordnen der mindestens einen Wärmetauschkammer (11) in dem Bodenaushub (160) umfasst.

11. Wärmetauschsystem nach einem der Ansprüche 8 bis 10, wobei die mindestens eine Kammergrenze (111) zumindest teilweise durch mindestens eine Bodengrenze (1601) gebildet ist.

12. Wärmetauschkammer nach einem der Ansprüche 1 bis 11, wobei die mindestens eine Wärmetauschkammer (11) zumindest teilweise durch mindestens ein Drainagesystem (1603) zum Vermeiden des Eindringens von Wasser in den mindestens einen Wärmetauschkammer-Innenraum (112) umgeben ist.

13. Wärmetauschsystem nach einem der Ansprüche 11 bis 12, wobei eine Decke (118) der mindestens einen Wärmetauschkammer (11) eine Schichtstruktur (1181) mit folgenden Schichten umfasst:
- Wärmedämmschicht (1182); und
- Bodenschicht (1184) mit aufgefüllter Erde.

14. Wärmetauschsystem nach Anspruch 13, wobei die Schichtstruktur (1181) mindestens eine Ballastschicht (1183) mit Sand und/oder mindestens eine Folienschicht (1185) mit mindestens einer Folie (119) umfasst.

15. Wärmetauschsystem nach einem der vorhergehenden Ansprüche, wobei das Gas bei Umgebungsdruck Luft ist.

16. Verfahren zum Herstellen eines Wärmetauschsystems (1) nach einem der Ansprüche 1 bis 15 mit folgenden Herstellungsschritten:
a) Bereitstellen mindestens einer Komponente (111, 116) der mindestens einen Wärmetauschkammer (11), und
b) Anordnen der mindestens einen Folie (119) auf der Komponente (111, 116) der mindestens einen Wärmetauschkammer (11) und zumindest teilweise auf der Oberseite (1114) der mindestens einen Wärmetauschkammer (11).

17. Verfahren nach Anspruch 16, wobei das Anordnen der mindestens einen Folie (119) auf der Komponente der mindestens einen Wärmetauschkammer (11) ein Festkleben der mindestens einen Folie (119) auf der Komponente der mindestens einen Wärmetauschkammer (11) umfasst.

## Revendications

1. Système d'échange de chaleur (1), muni de
- au moins une chambre d'échange de chaleur (11) qui présente des limites de chambre d'échange de chaleur (111) qui entourent au moins un intérieur de chambre d'échange de chaleur (112) de l'au moins une chambre d'échange de chaleur (11), dans lequel :
- les limites de chambre d'échange de chaleur (112) comprennent au moins une première ouverture (1111) pour guider un flux entrant (133) d'au moins un fluide de transfert de chaleur (131) à l'intérieur de l'au moins un intérieur de chambre d'échange de chaleur (112) et au moins une seconde ouverture pour guider un flux sortant (133) de l'au moins un fluide de transfert de chaleur (131) hors de l'au moins un intérieur de chambre d'échange de chaleur (112) ;
- au moins un matériau de stockage de chaleur (121) est agencé dans l'au moins un intérieur de chambre d'échange de chaleur (112) de telle sorte qu'un flux d'échange de chaleur (13) de l'au moins un fluide de transfert de chaleur (131) au travers de l'au moins un intérieur de chambre d'échange de chaleur (112) provoque un échange de chaleur entre l'au moins un matériau de stockage de chaleur (121) et l'au moins un fluide de transfert de chaleur (131) ;
- l'au moins une chambre d'échange de chaleur (11) est au moins partiellement recouverte par au moins une feuille (119) ;
- l'au moins une feuille (119) est agencée au moins partiellement sur le sommet (1114) de l'au moins une chambre d'échange de chaleur (11) ;
- l'au moins une feuille (119) est une feuille d'adaptation de dimension (1191) pour compenser un remplissage (122) de l'au moins un matériau de stockage de chaleur (121) dans l'au moins un intérieur de chambre de stockage de chaleur (112) ;
- l'au moins un matériau de stockage de chaleur (121) comprend des cailloux ; et
dans lequel l'au moins un fluide de transfert de chaleur (131) comprend un gaz à pression de gaz ambiante.

2. Système d'échange de chaleur selon la revendication 1, dans lequel l'au moins une feuille (119) est en outre agencée au moins partiellement sur un côté (1115) de l'au moins une chambre d'échange de chaleur (11) et/ou au moins partiellement en dessous de l'au moins une chambre d'échange de chaleur (11).

3. Système d'échange de chaleur selon la revendication 1 ou 2, dans lequel l'au moins une feuille (119) présente une résistance vis-à-vis d'une pénétration d'air et/ou d'eau.

4. Système d'échange de chaleur selon l'une quelconque des revendications 1 à 3, dans lequel l'au moins une chambre d'échange de chaleur (11) est rendue étanche par l'au moins une feuille (119).

5. Système d'échange de chaleur selon l'une quelconque des revendications précédentes, dans lequel la feuille d'adaptation de dimension (1191) comprend des plis (1192).

6. Système d'échange de chaleur selon la revendication 5, dans lequel les plis (1192) sont alignés parallèlement au flux d'échange de chaleur (13) et/ou perpendiculairement au flux d'échange de chaleur (13) de l'au moins un fluide de transfert de chaleur (131) au travers de l'au moins un intérieur de chambre d'échange de chaleur (112).

7. Système d'échange de chaleur selon l'une quelconque des revendications 1 à 6, dans lequel l'au moins une feuille (119, 1191) est une feuille en caoutchouc EPDM ou une feuille en PVC.

8. Système d'échange de chaleur selon l'une quelconque des revendications 1 à 7, dans lequel l'au moins une chambre d'échange de chaleur (11) est au moins partiellement agencée dans au moins une excavation de sol (160) d'un sol (161).

9. Système d'échange de chaleur selon la revendication 8, dans lequel au moins une limite de chambre (111) est au moins partiellement formée par au moins une limite de sol (1601).

10. Système d'échange de chaleur selon la revendication 8 ou 9, dans lequel l'excavation de sol (160) comprend au moins un châssis de base (162) pour agencer l'au moins une chambre d'échange de chaleur (11) dans l'excavation de sol (160).

11. Système d'échange de chaleur selon l'une quelconque des revendications 8 à 10, dans lequel au moins une limite de chambre (111) est au moins partiellement formée par au moins une limite de sol (1601).

12. Système d'échange de chaleur selon l'une quelconque des revendications 1 à 11, dans lequel l'au moins une chambre d'échange de chaleur (11) est au moins partiellement entourée par au moins un système de drainage (1603) pour éviter la pénétration d'eau à l'intérieur de l'au moins un intérieur de chambre d'échange de chaleur (112).

13. Système d'échange de chaleur selon l'une quelconque des revendications 11 et 12, dans lequel un plafond (118) de l'au moins une chambre d'échange de chaleur (11) comprend une structure de couches (1181) qui comporte les couches qui suivent :
- une couche d'isolation thermique (1182) ; et
- une couche de sol (1184) qui est remplie de terre.

14. Système d'échange de chaleur selon la revendication 13, dans lequel la structure de couches (1181) comprend au moins une couche de ballast (1183) qui comprend du sable et/ou au moins une couche de feuille (s) (1185) qui comprend au moins une feuille (119) .

15. Système d'échange de chaleur selon l'une quelconque des revendications précédentes, dans lequel le gaz à la pression ambiante est de l'air.

16. Procédé pour fabriquer un système d'échange de chaleur (1) selon l'une quelconque des revendications 1 à 15, lequel comprend les étapes de fabrication qui suivent :
a) la fourniture d'au moins un composant (111, 116) de l'au moins une chambre d'échange de chaleur (11) ; et
b) l'agencement de l'au moins une feuille (119) sur le composant (111, 116) de l'au moins une chambre d'échange de chaleur (11) et au moins partiellement sur le sommet (1114) de l'au moins une chambre d'échange de chaleur (11).

17. Procédé selon la revendication 16, dans lequel l'agencement de l'au moins une feuille (119) sur le composant de l'au moins une chambre d'échange de chaleur (11) comprend un collage de l'au moins une feuille (119) sur le composant de l'au moins une chambre d'échange de chaleur (11).
